# EUROPÄISCHE PATENTSCHRIFT

(11) **EP 1 990 223 B1**
(45) Veröffentlichungstag und Bekanntmachung des Hinweises auf die Patenterteilung: **16.11.2011**
(21) Anmeldenummer: 08008319.9
(22) Anmeldetag: 02.05.2008
(51) Int. Cl.: B60J 1/18, B60J 7/14

(54) **Verdeck eines Cabriolet-Fahrzeugs**
Soft top for a convertible
Capote d'un véhicule cabriolet

(30) Priorität: 08.05.2007 DE 102007021490
(43) Veröffentlichungstag der Anmeldung: 12.11.2008
(73) Patentinhaber: Wilhelm Karmann GmbH, 49084 Osnabrück (DE)
(72) Erfinder: Hilbk, Holger, 49201 Dissen a. T.W. (DE); Wesemann, Michael, 49565 Bramsche (DE)
(74) Vertreter: Kronthaler, Schmidt & Coll.

(56) Entgegenhaltungen:
- EP-A- 1 110 776
- WO-A-03/091052
- DE-B3-102005 055 383

## Beschreibung

Die Erfindung betrifft ein Verdeck eines Cabriolet-Fahrzeugs, welches zwischen einem einen Fahrgastraum überdeckenden geschlossenen Zustand und einem den Fahrgastraum freigebenden, offenen Zustand überführbar ist, nach der im Oberbegriff des Patentanspruches 1 näher definierten Art.

Aus der DE 102 51 961 B3 ist ein Verdeck eines Cabriolet-Fahrzeugs mit einer in einen Verdeckbezug eingebundenen Heckscheibe bekannt, wobei die Heckscheibe in einem seitlichen Randbereich einen Hebelmechanismus aufweist, mittels welchem die Heckscheibe in einem geschlossenen Zustand des Verdecks entgegen dem Verdeckbezug nach oben gedrückt wird und mittels welchem die Heckscheibe in einem offenen Zustand des Verdecks in eine untere Ablageposition überführbar ist.

Durch die Ausbildung des Hebelmechanismus mit einem einzigen Hebel mit zwei Gelenkpunkten ist insbesondere der Einsatz eines Verdecks mit einer Heckscheibe schwierig, bei welchem der durch den Verdeckbezug überbrückte Abstand zwischen der Heckscheibe und einem Stoffhaltebügel gering sein soll, da ein solcher Hebelmechanismus eine vergleichsweise große Verdeckstofflänge in diesem Bereich zur Durchführung einer Öffnungs- und Schließbewegung des Verdecks erfordert.

Weiterhin ist aus der DE 100 41 487 B4 eine versenkbare Heckscheibe, insbesondere Festglasscheibe, für ein Faltverdeck eines Kraftfahrzeugs bekannt, wobei die Heckscheibe über Schwenkhebel angelenkt und von einer geschlossenen Verdeckstellung in eine abgesenkte Verdeckstellung überführbar an einem unteren querverlaufenden Rand über eine horizontale Lagerachse schwenkbar mit einem Spannspriegel des Faltverdecks verbunden ist. Zur abstützenden Führung der Heckscheibe in die einzelnen Stellungen ist an beiden seitlichen Rändern der Festglasscheibe jeweils ein aus zwei gelenkig miteinander verbundenen Lenkhebeln gebildeter Kniehebel angeordnet, wobei einer der Lenkhebel über ein Betätigungselement mit einem verschwenkbaren Hauptspriegel oder einem Hauptlenker des Faltverdecks zwangsgeführt in der Schließ- und Öffnungsstellung verbunden ist und der untere Lenkhebel über einen Lagerbolzen am Spannspriegel angelenkt ist.

Mittels der zwei Lenkhebel bestehen bei einer derartigen Lösung mehrere Freiheitsgrade zur Steuerung der Festglasscheibe des Verdecks bei eine Überführung zwischen einer geschlossenen und einer offenen Verdeckposition. Allerdings kann hier eine kurze Stofflänge des Verdeckbezugs zwischen der Heckscheibe und dem Stoffspannspiegel dazu führen, dass die Stofflänge aufgrund dieser Freiheitsgrade bei einer Verlagerung der Heckscheibe zwischen der Position bei geschlossenem Verdeck und der Position bei geöffnetem Verdeck nicht ausreichend ist und nachteilhafterweise Spannungen in dem Verdeckbezug auftreten bzw. die Heckscheibenbewegung aufgrund der Spannung im Verdeckbezug gesperrt werden kann.

Weiterhin ist aus der EP 1 110 776 A2 ein Cabriolet-Fahrzeug mit einem auffaltbaren, mit einer Heckscheibe versehenen Dach bekannt, wobei das Verdeck heckseitig zwei seitliche, in Draufsicht im Wesentlichen dreiecksförmige Spannbügel aufweist. Die Heckscheibe ist in einer Führungsbahn mit einem dem Dach zugeordneten Dachrahmenteil und einem der Karosserie zugeordneten Karosserierahmenteil beweglich gehalten und in geschlossener Stellung des Daches zumindest bereichsweise aus einer geschlossenen Normalstellung in eine Absenkstellung beweglich. Die Heckscheibe ist dabei mit einem ersten Hebel in einer an den Spannbügeln angeordneten Langlochführung gelagert, wobei die Spannbügel jeweils einen zweiten Hebel bilden.

Ferner sind aus der DE 10 2005 055 383 B3 und der WO 03/091052 A1 Cabriolet-Fahrzeuge mit Hard-Top-Verdecken bekannt, welche jeweils einen Langlochmechanismus aufweisen.

Es ist somit Aufgabe der vorliegenden Erfindung, ein Verdeck eines Cabriolet-Fahrzeugs der eingangs genannten Art mit einer Abstützung einer Heckscheibe zu schaffen, die eine Verdeckgestaltung mit einer geringen zwischen der Heckscheibe und einem Stoffhaltebügel vorliegenden Verdeckbezugslänge und eine einfache und sichere Überführung der Heckscheibe zwischen ihren Positionen bei geschlossenem und geöffnetem Verdeck ermöglicht.

Diese Aufgabe wird mit einem Verdeck eines Cabriolet-Fahrzeugs gemäß den Merkmalen des Patentanspruches 1 gelöst.

Es ist somit ein Soft-Top-Verdeck eines Cabriolet-Fahrzeugs vorgesehen, welches zwischen einem einen Fahrgastraum überdeckenden, geschlossenen Zustand und einem den Fahrgastraum freigebenden, offenen Zustand überführbar ist, umfassend wenigstens eine Hebeleinrichtung, welche eine Bewegung einer in einen Verdeckbezug des Verdecks vollständig eingebundenen Heckscheibe bei einer Verdeckbewegung steuert und die Heckscheibe in geschlossenem Zustand des Verdecks in Fahrzeughochrichtung drückt, wobei die Hebeleinrichtung wenigstens mit einem an der Heckscheibe angeordneten ersten Hebel und einem an einem Verdeckgestänge angeordneten zweiten Hebel ausgebildet ist. Dabei wird erfindungsgemäß vorgeschlagen, dass eine Verbindung des ersten Hebels mit dem zweiten Hebel über ein in einem der Hebel ausgebildetes Langloch und ein in dem Langloch geführtes stiftförmiges Element des jeweils anderen Hebels ausgebildet ist.

Eine erfindungsgemäß ausgebildete Hebeleinrichtung zur Abstützung der Heckscheibe in einer Position bei geschlossenem Verdeck bietet den Vorteil, dass auch bei einer geringen zwischen der Heckscheibe und dem Stoffhaltebügel vorliegenden Stofflänge eines Verdeckbezugs eine Überführung des Verdecks von einem geschlossenen in einen offenen Zustand und umgekehrt auf einfache Weise ermöglicht ist, da durch die Hebeleinrichtung eine wenigstens annähernd kreisförrnige Drehung der Heckscheibe bei einer Überführung zwischen ihrer Position bei geschlossenem und offenem Verdeck um den Stoffhaltebügel realisiert ist. Eine Bewegung der Heckscheibe gegenüber dem Stoffhaltebügel in Fahrzeugfrontrichtung ist dabei nahezu vollkommen ausgeschlossen, wohingegen die Heckscheibe einen kleinen Bewegungsspielraum in Fahrzeugheckrichtung hat.

Bei der erfindungsgemäßen Hebeleinrichtung kann vorteilhafterweise ausgewählt werden, in welchem der Hebel das Langloch ausgebildet ist und welcher der Hebel das stiftförmige Element aufweist, mittels welchem der Hebel mit dem stiftförmigen Element in dem Langloch des anderen Hebels geführt ist. Hierdurch kann vorteilhafterweise die auf die jeweiligen äußere Rahmenbedingungen besser abgestimmte Lösung ausgewählt werden.

Dabei ist es nicht zwingend dass die Hebeleinrichtung aus nur zwei Hebeln gebildet wird. Gegebenfalls können der erste und der zweite Hebel mit der zwischen ihnen ausgebildeten Langlochführung Teil eines mehrere Hebel umfassenden Hebelmechanismus sein.

In jedem Fall wird die Heckscheibe mit der Hebeleinrichtung vorteilhafterweise seitlich abgestützt, wobei eine gerade Schlupfaufzugsline bei Vermeidung einer Durchbiegung durch das Gewicht der Heckscheibe erzielt wird.

Eine einfache Anordnung des ersten Hebels der Hebeleinrichtung an der Heckscheibe kann dadurch realisiert werden, dass der erste Hebel der Hebeleinrichtung an einem die Heckscheibe wenigstens bereichsweise umfassenden Rahmen gelenkig angeordnet ist.

Der zweite Hebel der Hebeleinrichtung kann in einer einfachen Ausbildung eines erfindungsgemäßen Verdecks an einem Stoffhaltebügel des Verdecks gelenkig angeordnet sein. Weiterhin kann der zweite Hebel der Hebeleinrichtung auch an einer einen Stoffhaltebügel in geschlossenem Zustand des Verdecks in eine untere Position drückenden Spannstange angeordnet sein, wenn eine solche Anordnung den jeweiligen räumlichen und konstruktiven Gegebenheiten besser entspricht.

Gemäß einer vorteilhaften Ausbildung eines erfindungsgemäßen Verdecks kann es vorgesehen sein, dass in einem Bereich der gelenkigen Anordnung des zweiten Hebels an dem Stoffhaltebügel bzw. der Spannstange eine insbesondere als Schenkelfeder ausgebildete Federeinrichtung angeordnet ist, welche ein dem ersten Hebel zugewandtes Ende des zweiten Hebels in Fahrzeugheckrichtung drückt. Mit einer derartigen Schenkelfeder wird eine Bewegung der Heckscheibe bei einer Überführung des Verdecks von einer geschlossenen Position in eine offene Position unterstützt und somit eine sichere Überführung gewährleistet.

Gemäß einer weiteren vorteilhaften Ausgestaltung eines Verdecks nach der Erfindung ist ein Koppelelement vorgesehen, welches einenends mit einem Hebel, insbesondere dem zweiten Hebel, und andernends mit einem Element des Verdecks, insbesondere dem Verdeckgestänge, derart verbunden ist, dass der Hebel bei einer Verdeckschließbewegung in eine wenigstens annähernd senkrecht zu der Heckscheibe ausgerichtete Position bewegt ist.

Mit einem derartigen Koppelelement kann die Hebeleinrichtung in geschlossener Position des Verdecks auf einfache Weise in einer Position gehalten werden, in der die Hebeleinrichtung die Heckscheibe entgegen dem Verdeckbezug nach oben drückt und somit eine definierte Position der Heckscheibe in geschlossenem Zustand des Verdecks ermöglicht, wodurch ein Flattern des Verdeckbezugs, welches aufgrund von Verwirbelungen bei einer Fahrt auftreten könnte, vorteilhafterweise verhindert wird.

In einer alternativen Ausgestaltung der Erfindung kann es auch vorgesehen sein, dass das Koppelelement an den Verdeckbezug angebunden ist.

Bei einer einfachen Ausführung der Erfindung kann das Koppelelement ein Lenker oder Spannseil darstellen und derart ausgebildet sein, dass die Hebeleinrichtung in geschlossenem Zustand des Verdecks mittels des Lenkers oder des Spannseils eine Position einnimmt, in der die Heckscheibe gegen den Verdeckbezug nach oben gedrückt wird.

Wenn in einem Einbauzustand des Verdecks beidseitig der Heckscheibe jeweils eine Hebeleinrichtung vorgesehen ist, kann eine optimale Kraftübertragung zwischen dem Verdeckgestänge und dem Mechanismus zur Bewegung der Heckscheibe realisiert werden.

Bei einem erfindungsgemäß ausgestalteten Verdeck ist es weiterhin vorteilhaft, wenn die Heckscheibe in den Verdeckbezug eingebunden ist, da hierdurch die Bewegung der Heckscheibe zwischen ihrer Position in Verdeckablagestellung und ihrer Position in Verdeckschließstellung von dem Verdeckbezug unterstützt und/oder eingeleitet werden kann.

Weitere Vorteile und vorteilhafte Ausführungen eines Verdecks eines Cabriolet-Fahrzeugs nach der Erfindung ergeben sich aus den Patentansprüchen, der Zeichnung und der Beschreibung.

Nachfolgend ist ein erfindungsgemäßes Verdeck eines Cabriolet-Fahrzeugs anhand der Zeichnung prinzipmäßig beschrieben.

Es zeigt:
- Fig. 1: eine vereinfachte dreidimensionale Ansicht eines Cabriolet-Fahrzeugs mit einem in geschlossenem Zustand dargestellten Verdeck;
- Fig. 2: eine vereinfachte dreidimensionale Ansicht eines Ausschnitts des Verdecks der Fig. 1, wobei eine Heckscheibe des Verdecks von einer Hebeleinrichtung abgestützt ist;
- Fig. 3: eine vereinfachte dreidimensionale Darstellung eines Ausschnitts des Verdecks mit der Hebeleinrichtung der Fig. 2, wobei die Hebeleinrichtung in einer Position bei einer Übergangsstellung des Verdecks zwischen der geschlossenen und einer offenen Position gezeigt ist;
- Fig. 4: eine prinzipmäßige dreidimensionale Ansicht eines Ausschnitts des Verdecks mit der Hebeleinrichtung der Fig. 2 und Fig. 3, wobei die Hebeleinrichtung in einer Position bei geöffnetem Verdeck dargestellt ist; und
- Fig. 5: eine vereinfachte dreidimensionale Seitenansicht eines Ausschnitts des Verdeck, welches mit einer alternativ ausgebildeten Hebeleinrichtung in einer Schließstellung dargestellt ist.

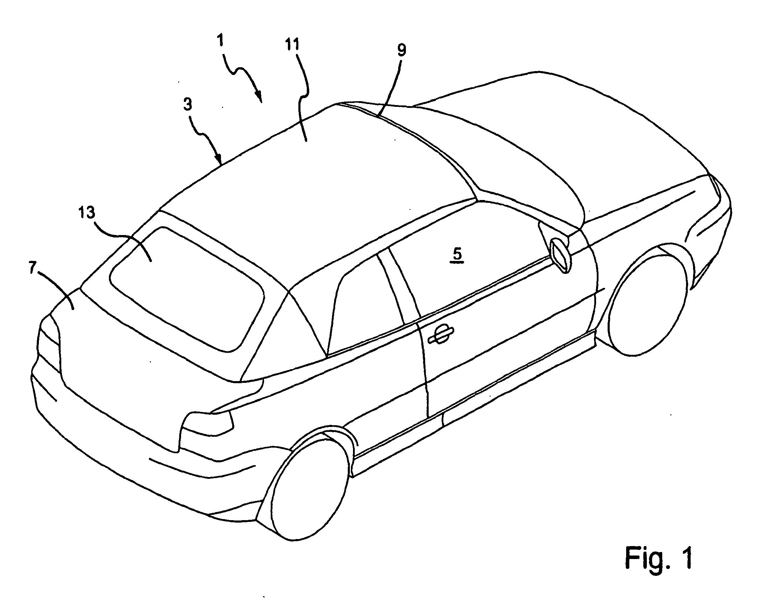

In Fig. 1 ist ein Cabriolet-Fahrzeug 1 mit einem in einer Schließstellung dargestellten, als Soft-Top ausgebildeten Verdeck 3 gezeigt, welches einen Fahrgastraum 5 von einem Heckdeckel 7 bis zu einem Windschutzscheibenrahmen 9 überspannt. Das Verdeck 3 ist vorliegend mit einem Verdeckbezug 11 ausgebildet, in welchen in einem Heckbereich eine Heckscheibe 13 eingebunden ist.

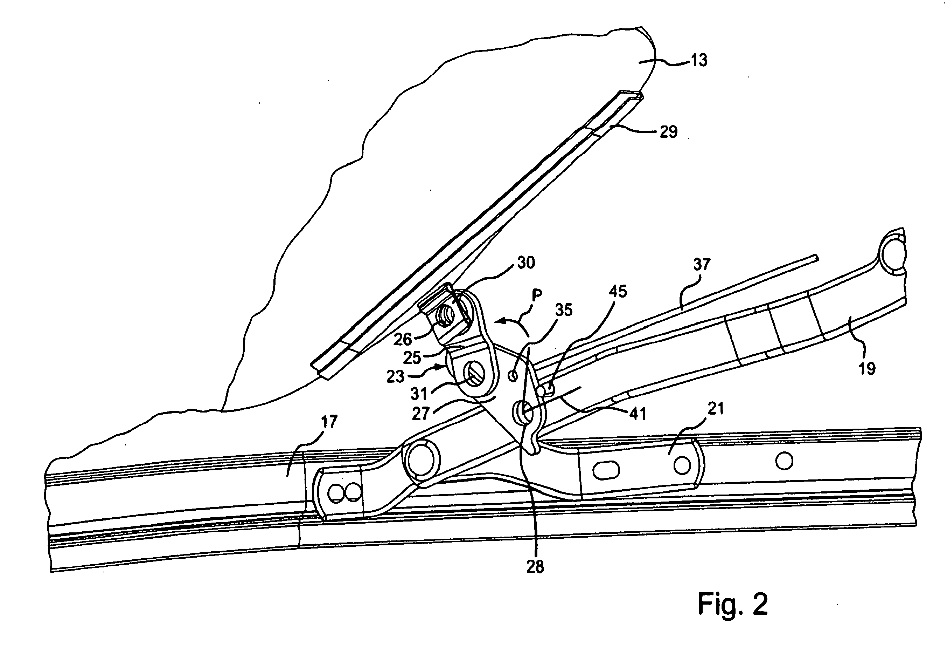

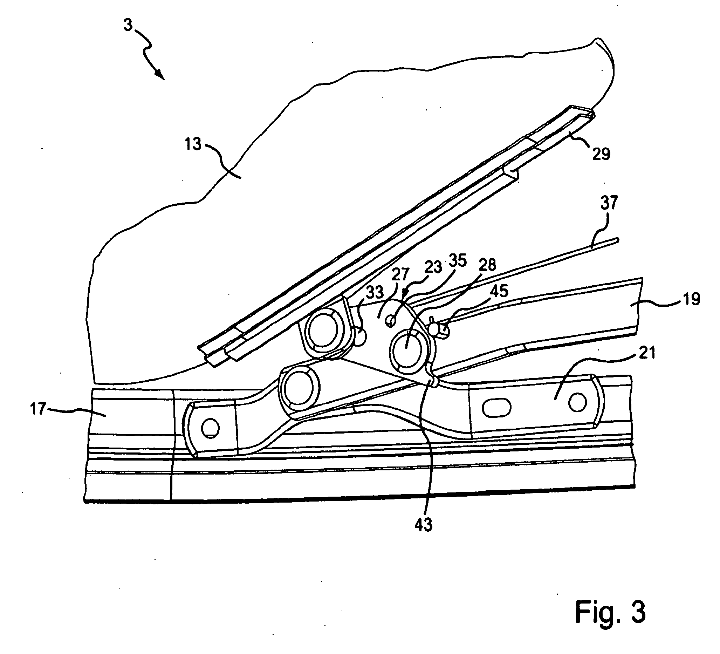

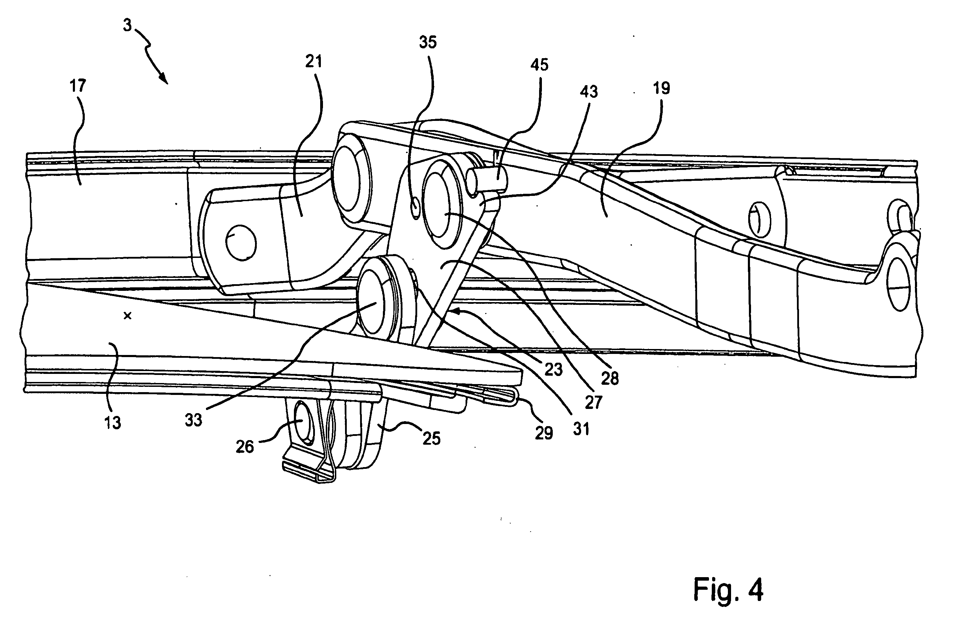

Das Verdeck 3 kann dabei mittels eines nicht näher dargestellten Hauptlagers zwischen der in der Fig. 1 und Fig. 2 dargestellten Schließstellung, über eine in der Fig. 3 dargestellte Zwischenstellung, in eine in der Fig. 4 dargestellte Öffnungsstellung überführt werden.

An dem Hauptlager ist ein Stoffhaltebügel 17 angeordnet, an welchem der Verdeckbezug 11 festgelegt ist und welcher den Verdeckbezug 11 in einer Schließstellung des Verdecks 3 gegen den Heckdeckel 7 drückt. Um den Stoffhaltebügel 17 bei geschlossenem Verdeck 3 gegen den Heckdeckel 7 zu drücken, weist das Verdeck 3 eine eine Totpunktstange bildende Spannstange 19 auf, welche mit einem an dem Stoffhaltebügel 17 festgelegten Spannelement 21 zusammenwirkt.

Durch den vorliegend von der Spannstange 19 und dem Spannelement 21 ausgebildeten Zweischlag ist die Spannstange 19 gegenüber herkömmlichen Spannstangen in Richtung eines Fahrzeugbodens belastbar, wodurch die Heckscheibe 13 in Schließstellung des Verdecks 3 an der Spannstange 19 abgestützt werden kann.

Hierzu sind zwei baugleiche Hebeleinrichtungen vorgesehen, von welchen jeweils eine einer Fahrzeugseite zugeordnet ist und nur die einer in Fahrzeugfrontrichtung linken Seite zugeordnete Hebeleinrichtung 23 dargestellt und im folgenden stellvertretend für die der rechten Fahrzeugseite zugeordnete Hebeleinrichtung beschrieben ist.

Die Hebeleinrichtung 23 ist vorliegend mit zwei Hebeln 25 und 27 ausgebildet, wobei ein erster Hebel 25 der Hebeleinrichtung 23 an einem die Heckscheibe umfassenden Rahmen 29 über einen ersten Gelenkpunkt 26 mit einer Nietsicherung 30 gelenkig angebunden ist und wobei ein zweiter Hebel 27 der Hebeleinrichtung 23 über einem zweiten Gelenkpunkt 28 gelenkig an der Spannstange 19 angebunden ist.

Eine Verbindung des ersten Hebels 25 mit dem zweiten Hebel 27 ist dabei über ein in dem zweiten Hebel 27 ausgebildetes und insbesondere in der Fig. 3 ersichtliches Langloch 31 realisiert, in welchem ein an dem ersten Hebel 25 ausgebildetes stiftförmiges Element 33 in der Form eines Niets geführt ist, wobei das stiftförmige Element in der Fig. 2 nicht dargestellt ist.

Der zweite Hebel 27 weist in einem fahrzeugfrontseitigen Bereich eine Bohrung 35 zur Anbindung eines als Seil 37 ausgebildeten Koppelelements auf, welches in dem in der Fig. 2 gezeigten geschlossenen Zustand des Verdecks 3 in etwa parallel zu der Spannstange 19 verläuft und an einem dem zweiten Hebel 27 abgewandten Ende mit einem Element eines verdeckgestänges verbunden ist. Der erste Hebel 25 wird durch das in diesem zustand gespannte Seil 37 in einer nahezu senkrecht zu der Spannstange 19 liegenden Position gehalten, so dass die Heckscheibe 13 hierdurch in Fahrzeughochrichtung gegen den Verdeckbezug 11 gedrückt wird.

Bei einer Verdecköffnungsbewegung, welche über das Hauptlager eingeleitet wird, lässt die Spannung in dem Seil 37 durch eine Bewegung des mit dem Seil 37 verbundenen Elements des Verdeckgestänges nach, so dass die beiden Hebel 25 und 27 einerseits durch die Schwerkraft der Heckscheibe 13 und andererseits durch eine als Schenkelfeder 41 ausgebildete Federeinrichtung, welche in der Fig. 2 schematisch angedeutet ist, in Richtung des Fahrzeughecks gedrückt werden.

Die Schenkelfeder 41 ist dabei im Bereich der gelenkigen Anordnung des zweiten Hebels 27 an der Spannstange 19 derart zwischen dem zweiten Hebel 27 und der Spannstange 19 angeordnet, dass die Schenkelfeder 41 ein dem ersten Hebel 25 zugewandtes Ende des zweiten Hebels 27 insbesondere in geschlossenem Zustand des Verdecks 3 in Richtung des Fahrzeughecks drückt.

Die Heckscheibe 13 wird bei der Überführung des Verdecks 3 von einer geschlossenen Stellung in eine offene Stellung in Richtung eines Fahrzeugbodens bewegt, bis die Heckscheibe 13 eine in der Fig. 4 dargestellte, wenigstens annähernd horizontale Lage einnimmt.

Der erste Hebel 25 und der zweite Hebel 27 werden dabei zunächst an ihren zueinander weisenden Enden gemäß Fig. 3 in Richtung des Fahrzeughecks bewegt, wobei das stiftförmige Element 33 des ersten Hebels 23 in dem Langloch 31 des zweiten Hebels 25 in Richtung des in geschlossenem Zustand des Verdecks 3 in Richtung der Heckscheibe 13 weisenden Endes des Langlochs 31 verschoben wird, so dass die zwischen dem Stoffhaltebügel 17 und der Heckscheibe 13 vorliegende kurze Stofflänge des Verdeckbezugs 11 von vorliegend etwa 60 mm zur Verschwenkung der Heckscheibe 13 ausreicht.

Der zweite Hebel 27 wird bei einer Überführung des Verdecks 3 von einer Schließstellung in eine Öffnungsstellung mit seinem dem ersten Hebel 25 zugewandten Ende soweit in Fahrzeugheckrichtung um den zweiten Gelenkpunkt 28 an der Spannstange 19 gedreht, bis ein in den Fig. 2 bis Fig. 4 dargestellter Anschlag 43 des zweiten Hebels 27 mit einem an der Spannstange 19 ausgebildeten zylinderförmigen Element 45 zur Anlage kommt und ein Weiterdrehen des zweiten Hebels 27 verhindert wird.

Der erste Hebel 23 wird bei dem vorliegenden Ausführungsbeispiel aus seiner in der Fig. 2 gezeigten Position insgesamt um annähernd 180° in Richtung des Pfeils P um seine Anbindung an dem Rahmen 29 der Heckscheibe 13 gedreht, so dass ein der Heckscheibe 13 zugewandtes Ende des ersten Hebels 25 bei dem in der Fig. 4 dargestellten Zustand bei geöffnetem Verdeck 3 unterhalb eines dem zweiten Hebel 25 zugewandten Endes des ersten Hebels 23 angeordnet ist. Weiterhin ist die Heckscheibe 13 in diesem Zustand unterhalb des Gelenkpunktes 28 und unterhalb der Spannstange 19 angeordnet. In dieser Lage des Verdecks 3 nimmt das stiftförmige Element 33 des ersten Hebels 23 eine Position ähnlich der Position bei geschlossenem Verdeck 3 in dem Langloch 31 ein.

Der Zweischlag aus erstem Hebel 23 und zweitem Hebel 25 kann somit aufgrund des Langlochs auch unter entsprechend ungünstigen äußeren Rahmenbedingungen "durchschlagen", d.h. sich nach oben und nach unten bewegen.

Die Heckscheibe 13 eignet sich in Verdecköffnungsstellung durch ihre sehr tiefe Ablageposition als Verdeckkastenboden, auf welchem weitere Verdeckelemente abgelegt werden können, so dass ein zusätzlicher Boden zur Abgrenzung gegenüber einem heckseitigen Stauraum bzw. Kofferraum entfallen kann.

Bei einem Übergang des Verdecks 3 von einer offenen Position in eine geschlossene Position wird die in den Verdeckbezug 11 eingebundene Heckscheibe 13 durch den Verdeckbezug 11 in Fahrzeughochrichtung mitbewegt und durch die Hebeleinrichtung 23 entgegen dem Verdeckbezug 11 nach oben gedrückt, nachdem das Seil 37 durch die Bewegung des Verdeckgestänges den zweiten Hebel 27 der Hebeleinrichtung entgegen der Federkraft der Schenkelfeder 41 mit seinem dem ersten Hebel 25 zugewandten Ende in seine fahrzeugfrontseitige Endposition bewegt wurde.

Während einer Überführung des Verdecks von einer Schließstellung in eine Öffnungsstellung und umgekehrt bewegt sich ein heckseitiges Ende der Heckscheibe 13 aufgrund des Anbindungsmechanismus mit den Hebeleinrichtungen 31 im Wesentlichen in Form einer einfachen Drehbewegung um den Stoffhaltebügel 17 nur wenig relativ zu dem Stoffhaltebügel 25, so dass der Einsatz eines Verdecks 3 mit einem sehr kurzen zwischen dem Stoffhaltebügel 25 und der Heckscheibe 13 vorliegenden Bereichs des Verdeckbezugs 11 möglich ist. Eine Krafteinleitung in die Hebeleinrichtung 23 muss dabei letztendlich nur in geschlossener Stellung des Verdecks 3 aufrecht erhalten sein.

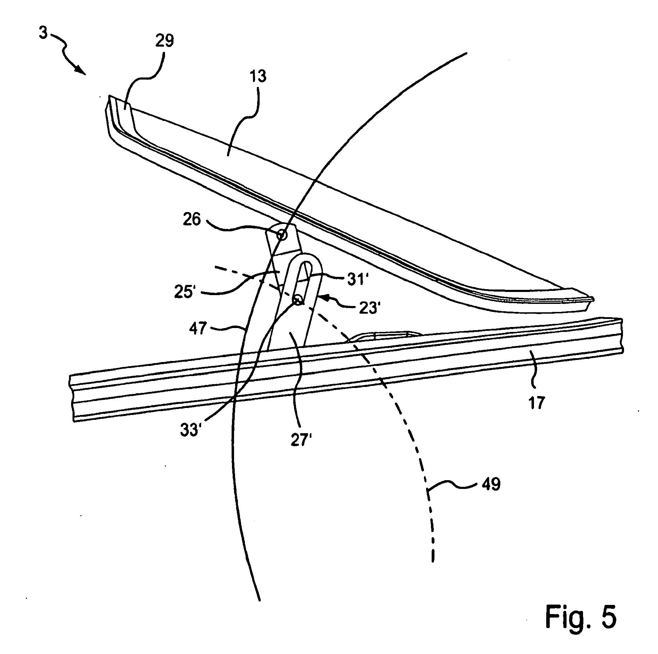

In der Fig. 5 und Fig. 6 ist ein zweites Ausführungsbeispiel des Verdecks 3 mit einer alternativ gestalteten Hebeleinrichtung 23' gezeigt, welche ebenfalls einen ersetn Hebel 25' und einen zweiten Hebel 25' aufweist.

Der zweite Hebel 27' der Hebeleinrichtung 31' ist dabei direkt über den ersten Gelenkpunkt 26 an dem Stoffhaltebügel 17 angeordnet.

Bei einer Überführung des Verdecks 3 zwischen einer Öffnungsstellung und einer Schließstellung, welche im Wesentlichen derjenigen des ersten Ausführungsbeispiels entspricht, bewegt sich der erste Gelenkpunkt 26 wenigstens annähernd auf einer skizzenhaft angedeuteten ersten Kreisbahn 47. Auch ein in einem Langloch 31' des zweiten Hebels 27' geführtes stiftförmiges Element 33' bewegt sich bei einer Überführung des Verdecks auf einer skizzenhaft angedeuteten, wenigstens annähernd kreisförmigen, strichliert dargestellten Bewegungsbahn 49.

Die erforderliche Länge des Langlochs 31' hängt wie bei dem in Fig. 1 bis Fig. 4 gezeigten Ausführungsbeispiel ab von der zwischen der Heckscheibe 13 und dem Stoffhaltebügels 17 vorliegenden Stofflänge des Verdeckbezugs 11 und den Bewegungsbahnen 47 und 49 des Gelenkpunkts 26 und des stiftförmigen Elements 33'.

## Patentansprüche

1. Soft-Top-Verdeck eines Cabriolet-Fahrzeugs (1), welches zwischen einem einen Fahrgastraum (5) überdeckenden, geschlossenen Zustand und einem den Fahrgastraum (5) freigebenden, offenen Zustand überführbar ist, umfassend wenigstens eine Hebeleinrichtung (23, 23'), welche eine Bewegung einer in einen Verdeckbezug (11) des Verdecks (3) vollständig eingebundenen Heckscheibe (13) bei einer Verdeckbewegung steuert und die Heckscheibe (13) in geschlossenem Zustand des Verdecks (3) entgegen dem Verdeckbezug in Fanrzeughöchrichtung drückt, wobei die Hebeleinrichtung (23, 23') wenigstens mit einem an der Heckscheibe (13) angeordneten ersten Hebel (25, 25') und einem an einem Verdeckgestänge angeordneten zweiten Hebel (27, 27') ausgebildet ist,
**dadurch gekennzeichnet,**
**dass** eine Verbindung des ersten Hebels (25, 25') mit dem zweiten Hebel (27, 27') über ein in einem der Hebel (25 oder 25' bzw. 27 oder 27') ausgebildetes Langloch (31, 31') und ein in dem Langloch (31, 31') geführtes stiftförmiges Element (33, 33') des jeweils anderen Hebels (27 oder 27' bzw. 25 oder 25') ausgebildet ist.

2. Soft-Top-Verdeck nach Anspruch 1, **dadurch gekennzeichnet,**
**dass** das Langloch in dem ersten Hebel ausgebildet ist und der zweite Hebel das stiftförmige Element aufweist, mittels welchem der zweite Hebel in dem Langloch des ersten Hebels geführt ist.

3. Soft-Top-Verdeck nach Anspruch 1, **dadurch gekennzeichnet,**
**dass** das Langloch (31, 31') in dem zweiten Hebel (27, 27') ausgebildet ist und der erste Hebel (25, 25') das stiftförmige Element (33, 33') aufweist, mittels welchem der erste Hebel (25, 25') in dem Langloch (31, 31') des zweiten Hebels (27, 27') geführt ist.

4. Soft-Top-Verdeck nach einem der Ansprüche 1 bis 3,
**dadurch gekennzeichnet,**
**dass** der erste Hebel (25, 25') an einem die Heckscheibe (13) wenigstens bereichsweise umfassenden Rahmen (29) gelenkig angeordnet ist.

5. Soft-Top-Verdeck nach einem der Ansprüche 1 bis 4,
**dadurch gekennzeichnet,**
**dass** der zweite Hebel (27') an einem Stoffhaltebügel (17) des Verdecks (3) gelenkig angeordnet ist.

6. Soft-Top-Verdeck nach einem der Ansprüche 1 bis 4,
**dadurch gekennzeichnet,**
**dass** der zweite Hebel (27) an einer einen Stoffhaltebügel (17) in geschlossenem Zustand des Verdecks (3) in eine untere Position drückenden Spannstange (21) angeordnet ist.

7. Soft-Top-Verdeck nach einem der Ansprüche 5 oder 6,
**dadurch gekennzeichnet,**
**dass** in einem Bereich der gelenkigen Anordnung des zweiten Hebels (27, 27') an dem Stoffhaltebügel (17) bzw. der Spannstange (19) eine insbesondere als Schenkelfeder (41) ausgebildete Federeinrichtung vorgesehen ist, welche ein dem ersten Hebel (25, 25') zugewandtes Ende des zweiten Hebels (27, 27') in Fahrzeugheckrichtung drückt.

8. Soft-Top-Verdeck nach einem der Ansprüche 1 bis 7,
**dadurch gekennzeichnet,**
**dass** ein Koppelelement (37) vorgesehen ist, welches einenends mit einem Hebel (25, 25' bzw. 27, 27'), insbesondere dem zweiten Hebel (27, 27'), und andernends mit einem Element (39) des Verdecks (3), insbesondere dem Verdeckgestänge, verbunden ist.

9. Soft-Top-Verdeck nach Anspruch 8,
**dadurch gekennzeichnet,**
**dass** das Koppelelement als Lenker oder Spannseil ausgebildet ist.

10. Soft-Top-Verdeck nach einem der Ansprüche 1 bis 9,
**dadurch gekennzeichnet,**
**dass** in einem Einbauzustand des Verdecks (3) beidseitig der Heckscheibe (13) jeweils eine Hebeleinrichtung (23, 23') vorgesehen ist.

## Claims

1. A soft top for a convertible vehicle (1), which can be moved between a closed state covering a passenger compartment (5) and an open state uncovering the passenger compartment (5), said soft top comprising at least one lever means (23, 23') which, during a movement of the soft top, controls a movement of a rear window (13) fully integrated in a soft-top cover (11) of the soft top (3), and which, when the soft top (3) is closed, pushes the rear window (13) against the soft-top cover in a vertical direction of the vehicle, said lever means (23, 23') being provided with at least a first lever (25, 25') disposed on the rear window (13) and a second lever (27, 27') disposed on a soft-top linkage,
**characterised in that** a connection of the first lever (25, 25') with the second lever (27, 27') is provided by an oblong hole (31, 31') formed in one of the levers (25 or 25' and 27 or 27', respectively) and a pin-shaped element (33, 33') of the respective other lever (27 or 27' and 25 or 25', respectively), which pin-shaped element (33, 33') is guided in the oblong hole (31, 31').

2. The soft top according to claim 1, **characterised in that** the oblong hole is formed in the first lever, and the second lever comprises the pin-shaped element by means of which the second lever is guided in the oblong hole of the first lever.

3. The soft top according to claim 1, **characterised in that** the oblong hole (31, 31') is formed in the second lever (27, 27'), and the first lever (25, 25') comprises the pin-shaped element (33, 33') by means of which the first lever (25, 25') is guided in the oblong hole (31, 31') of the second lever (27, 27').

4. The soft top according to any one of claims 1 to 3, **characterised in that** the first lever (25, 25') is articulated to a frame (29) at least partially framing the rear window (13).

5. The soft top according to any one of claims 1 to 4, **characterised in that** the second lever (27') is articulated to a cover holding bow (17) of the soft top (3).

6. The soft top according to any one of claims 1 to 4, **characterised in that** the second lever (27) is disposed on a tensioning rod (21) which pushes a cover holding bow (17) into a lower position when the soft top (3) is closed.

7. The soft top according to any one of claims 5 or 6, **characterised in that** one area of the articulation of the second lever (27, 27') to the cover holding bow (17) or the tensioning rod (19), respectively, is provided with a spring means, in particular in the form of a leg spring (41), which pushes an end of the second lever (27, 27') facing the first lever (25, 25') towards the rear of the vehicle.

8. The soft top according to any one of claims 1 to 7, **characterised in that** a coupling element (37) is provided whose one end is connected to a lever (25, 25' or 27, 27', respectively), in particular to the second lever (27, 27'), and whose other end is connected to an element (39) of the soft top (3), in particular the soft-top linkage.

9. The soft top according to claim 8, **characterised in that** the coupling element is provided as a connecting rod or as a tensioning cable.

10. The soft top according to any one of claims 1 to 9, **characterised in that** one lever means (23, 23') each is provided on either side of the rear window (13) in an installed condition of the soft top (3).

## Revendications

1. Capote pour un véhicule cabriolet (1), ladite capote étant déplaçable entre un état fermé recouvrant un habitacle (5) et un état ouvert découvrant l'habitacle (5), ladite capote comprenant au moins un moyen de levier (23, 23') qui, lors d'un déplacement de la capote, commande un déplacement d'une lunette arrière (13) complètement intégrée dans un recouvrement (11) de la capote (3), et qui, à l'état fermé de la capote (3), pousse la lunette arrière (13) à l'encontre du recouvrement de capote, en direction verticale du véhicule, ledit moyen de levier (23, 23') présentant au moins un premier levier (25, 25'), disposé sur la lunette arrière (13), et un deuxième levier (27, 27'), disposé sur une tringlerie de capote,
**caractérisée en ce que** le premier levier (25, 25') est relié au deuxième levier (27, 27') par un trou oblong (31, 31') réalisé dans l'un des leviers (25 ou 25' et 27 ou 27' respectivement) et par un élément sous forme de goupille (33, 33') de l'autre levier respectif (27 ou 27' et 25 ou 25' respectivement), ledit élément sous forme de goupille (33, 33') étant guidé dans le trou oblong (31,31').

2. Capote selon la revendication 1, **caractérisée en ce que** le trou oblong est réalisé dans le premier levier, et le deuxième levier comprend l'élément sous forme de goupille au moyen duquel le deuxième levier est guidé dans le trou oblong du premier levier.

3. Capote selon la revendication 1, **caractérisée en ce que** le trou oblong (31, 31') est réalisé dans le deuxième levier (27, 27'), et le premier levier (25, 25') comprend l'élément sous forme de goupille (33, 33') au moyen duquel le premier levier (25, 25') est guidé dans le trou oblong (31, 31') du deuxième levier (27, 27').

4. Capote selon l'une quelconque des revendications 1 à 3, **caractérisée en ce que** le premier levier (25, 25') est articulé sur un cadre (29) qui comprend au moins partiellement la lunette arrière (13).

5. Capote selon l'une quelconque des revendications 1 à 4, **caractérisée en ce que** le deuxième levier (27') est articulé sur un étrier de retenue (17) de la capote (3).

6. Capote selon l'une quelconque des revendications 1 à 4, **caractérisée en ce que** le deuxième levier (27) est disposé sur une barre de tension (21) qui, à l'état fermé de la capote (3), pousse un étrier de retenue (17) vers une position inférieure.

7. Capote selon l'une quelconque des revendications 5 ou 6, **caractérisée en ce que** l'on prévoit, dans une région de l'articulation du deuxième levier (27, 27') respectivement à l'étrier de retenue (17) ou à la barre de tension (19), un moyen formant ressort, notamment sous forme d'un ressort à bras (41) qui pousse vers l'arrière du véhicule une extrémité du deuxième levier (27, 27') tournée vers le premier levier (25, 25').

8. Capote selon l'une quelconque des revendications 1 à 7, **caractérisée en ce que** l'on prévoit un élément de couplage (37) dont une extrémité est reliée à un levier (25, 25' ou 27, 27' respectivement), notamment au deuxième levier (27, 27'), et dont l'autre extrémité est reliée à un élément (39) de la capote (3), notamment la tringlerie de capote.

9. Capote selon la revendication 8, **caractérisée en ce que** l'élément de couplage se présente sous forme d'un bras ou d'un câble tendeur.

10. Capote selon l'une quelconque des revendications 1 à 9, **caractérisée en ce que** l'on prévoit, à l'état installé de la capote (3), un moyen de levier (23, 23') respectif de chacun des deux côtés de la lunette arrière (13).
